# EUROPÄISCHE PATENTANMELDUNG

(11) **EP 1 930 229 A2**
(43) Veröffentlichungstag der Anmeldung: **11.06.2008**
(21) Anmeldenummer: 07122089.1
(22) Anmeldetag: 03.12.2007
(51) Int. Cl.: B62D 5/04, B62D 6/00, B62D 6/04

(54) **VERFAHREN ZUM BETREIBEN EINER HILFSKRAFTLENKUNG**

(30) Priorität: 04.12.2006 DE 102006057084
(71) Anmelder: ZF-Lenksysteme GmbH, 73527 Schwäbisch Gmünd (DE)
(72) Erfinder: Heilig, Arnulf, 73529, Schwäbisch Gmünd (DE); Montgomery, Scott, 73565, Spraitbach (DE); Müller, Claus-Dieter, 73550, Waldstetten (DE)

(57) **Zusammenfassung**

Es werden ein Verfahren zum Betreiben einer Hilfskraftlenkung (10) und eine solche Hilfskraftlenkung (10) vorgestellt, die für eine Geradeauslaufkompensation eingerichtet sind. Bei dem Verfahren ist vorgesehen, dass das aufgebrachte Handmoment (M_{H}) über einen Zeitraum integriert wird und der Integrationswert (I_{H}) als Kompensationswert (M_{K}) mit dem aktuellen Handmoment (M_{H}) verrechnet wird.

## Beschreibung

Die Erfindung betrifft ein Verfahren zum Betreiben einer Hilfskraftlenkung, bei dem eine Geradeauskompensation durchgeführt wird, und eine Hilfskraftlenkung zur Durchführung des Verfahrens. Die Erfindung betrifft weiterhin ein Computerprogramm und ein Computerprogrammprodukt zur Durchführung des Verfahrens.

Sogenannte Hilfskraftlenkungen in Kraftfahrzeugen unterstützen den Fahrer beim Lenken, wobei ein Servoantrieb mit einem Elektromotor zur Realisierung der Lenkunterstützung dient.

Eine besondere Anforderung an die Hilfskraftlenkung ergibt sich bei längeranliegenden Störgrößen, wie bspw. durch Seitenwind oder bei quer zur Fahrtrichtung geneigter Fahrbahn. In solchen Situationen soll die Hilfskraftlenkung den Fahrer beim Gegenlenken unterstützen, um so den Geradeauslauf des Kraftfahrzeugs bei möglichst geringem Kraftaufwand des Fahrers zu gewährleisten. Hierbei ist insbesondere wichtig, zwischen längeranliegenden Störgrößen und kurzzeitigen Einwirkungen zu unterscheiden.

Es ist bekannt, eine Geradeauslaufkompensation durch Integration und Nachführen des Lenkwinkels zu verwirklichen. Dies hat jedoch den Nachteil, dass die Wirksamkeit der Kompensation durch den aktiven Rücklauf bestimmt ist.

Es soll daher eine Funktion vorgestellt werden, die eine Geradeauslaufkompensation, bspw. bei Seitenwind und geneigter bzw. "hängender" Fahrbahn, ermöglicht.

Das erfindungsgemäße Verfahren zum Betreiben einer Hilfskraftlenkung realisiert eine Geradeauslaufkompensation, wobei das aufgebrachte Handmoment abzüglich eines Kompensationswerts über einen Zeitraum integriert wird und der Integrationswert als der Kompensationswert mit dem aktuellen Handmoment verrechnet wird.

Mit dem erfindungsgemäßen Verfahren werden die vorstehend genannten Nachteile vermieden und es wird ein "entspanntes" Verfahren ermöglicht, da der Fahrer bei längeranliegenden Störgrößen nicht aktiv gegenhalten muss. Hinzu kommt, dass der Fahrzeughersteller günstigere Reifen einsetzen kann, die nicht für hängende Fahrbahnen optimiert sind.

Es ist somit vorgesehen, das Handmoment, das am Lenkrad von dem Fahrer aufgebracht wird, über einen Zeitraum zu integrieren und den erhaltenen Integrationswert als Kompensationswert mit dem aktuellen Handmoment zu verrechnen.

Dieser Kompensationswert kann unter Berücksichtigung des Handmoments, des Lenkwinkels, der Lenkgeschwindigkeit, der Gierrate, der Fahrzeuggeschwindigkeit und/oder der Querbeschleunigung bzw. der minimalen und maximalen Werte der vorstehend genannten Größen berechnet werden. Der Integrationsfaktor ist regelmäßig abhängig von der Fahrzeuggeschwindigkeit.

Der Kompensationswert kann bei hohen Lenkwinkeln, Lenkgeschwindigkeiten, Handmomenten, Gierraten und/oder Querbeschleunigungen zurückgesetzt werden.

In Ausgestaltung ist vorgesehen, dass der Kompensationswert mit einem PT1-Glied gefiltert wird.

Die Verzögerung des PT1-Glieds kann in Abhängigkeit der Fahrgeschwindigkeit des Kraftfahrzeugs vorgegeben. Ebenso kann eine Integrationszeitkonstante in Abhängigkeit der Fahrgeschwindigkeit des Kraftfahrzeugs vorgegeben werden.

Die Erfindung betrifft außerdem ein Computerprogramm mit Programmcodemitteln, das zur Ausführung eines Verfahrens zum Betreiben einer Hilfskraftlenkung der vorstehend beschriebenen Art dient, wenn das Computerprogramm auf einem Mikroprozessor eines Computers, insbesondere in einem Steuergerät der Hilfskraftlenkung, zur Ausführung kommt.

Dieses Computerprogramm kann auf einem computerlesbaren Datenträger, wie bspw. einer Diskette, CD, DVD, Festplatte, einem USB-Memory-Stick oder ähnlichem oder einem Internetserver, als Computerprogrammprodukt gespeichert sein. Von dort kann das Computerprogramm in ein Speicherelement des Steuergeräts übertragen werden.

Außerdem betrifft die Erfindung eine Hilfskraftlenkung eines Kraftfahrzeugs, die eine Lenkhandhabe, einen Servoantrieb mit einem Elektromotor und ein elektronisches Steuergerät zur Ansteuerung des Elektromotors aufweist. Die Lenkhandhabe dient zur Vorgabe eines Lenkradwinkels als Maß für einen gewünschten Lenkwinkel für wenigstens ein lenkbares Rad des Kraftfahrzeugs. Der Servoantrieb mit einem Elektromotor dient zur Realisierung der Lenkunterstützung. Bei der erfindungsgemäßen Hilfskraftlenkung ist vorgesehen, dass das elektronische Steuergerät zur Durchführung eines vorstehend beschriebenen Verfahrens nach einem der Ansprüche 1 bis 5 ausgebildet ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung eine bevorzugte Ausführungsform der erfindungsgemäßen Hilfskraftlenkung.
- Figur 2: zeigt in einem Blockschaltbild eine mögliche Implementierung einer Ausführungsform des erfindungsgemäßen Verfahrens.

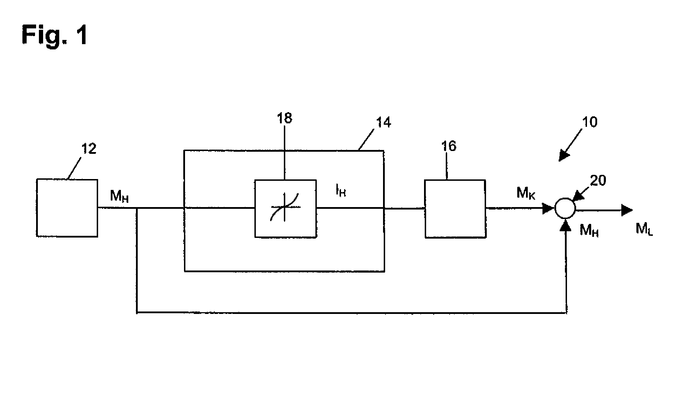

Figur 1 zeigt eine Hilfskraftlenkung 10, die zur Ausführung des erfindungsgemäßen Verfahrens geeignet ist und typischerweise in einem Kraftfahrzeug zum Einsatz kommt. Diese Hilfskraftlenkung 10 umfasst eine Lenkhandhabe 12, in der Regel ein Lenkrad, ein Steuergerät 14 und einen Servoantrieb 16 mit einem nicht dargestellten Elektromotor.

Über die Lenkhandhabe 12 gibt der Fahrer ein Handmoment M_{H} ein, das zunächst den Lenkwinkel bestimmt. Insbesondere bei hängenden Fahrbahnen oder Seitenwind ist der Fahrer gehalten, ein Handmoment M_{H} einzuleiten, um den Geradeauslauf des Kraftfahrzeugs sicherzustellen.

In dem Steuergerät 14 ist nunmehr ein Integrator 18 vorgesehen, der über einen bestimmten, vorgebbaren Zeitraum eine Integration des Handmoments M_{H} vornimmt und auf diese Weise einen Integrationswert I_{H} ermittelt. Auf Grundlage dieses Integrationswerts I_{H} gibt der Servoantrieb 16 einen Kompensationswert M_{K} aus, der mit dem aktuellen Handmoment M_{H} bei 20 verrechnet wird. Somit ergibt sich ein Lenkmoment M_{L}, wobei aufgrund der Unterstützung durch den Kompensationswert M_{K} der Fahrer im Idealfall kein Handmoment M_{H} aufbringen muss, um den erwünschten Geradeauslauf sicherzustellen.

Der Kompensationswert M_{K} wird üblicherweise unter Berücksichtigung der minimalen und maximalen Werte für das Handmoment, den Lenkwinkel, die Lenkgeschwindigkeit, die Querbeschleunigung und/oder die Gierrate ermittelt. Der Integrationsfaktor ist zudem vorzugsweise abhängig von der Fahrzeuggeschwindigkeit.

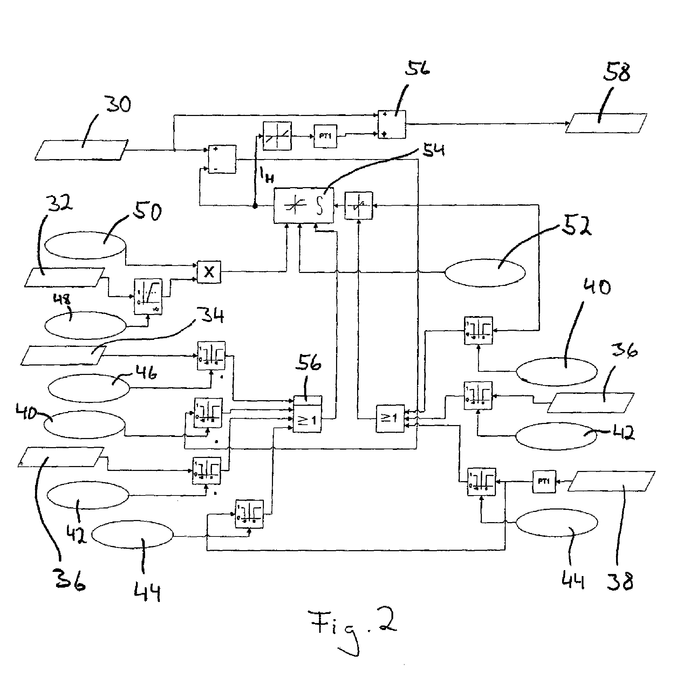

In Figur 2 ist in einem Blockschaltbild eine mögliche Implementierung des Geradeauslaufkompensationsverfahrens wiedergegeben.

Als Eingangsgrößen dienen in Block 30 das Handmoment, in Block 32 die Geschwindigkeit des Kraftfahrzeugs in Block 34 die Lenkgeschwindigkeit und in Blöcken 36 der Lenkwinkel. Zudem ist die Querbeschleunigung in Block 38 eine Eingangsgröße.

Als Vorbedingungen werden in Blöcken 40 ein maximales Handmoment, in Blöcken 42 ein maximaler Lenkwinkelbereich und in Blöcken 44 eine maximale Gierrate und/oder eine maximale Querbeschleunigung vorgegeben. Eine maximale Lenkgeschwindigkeit wird in Block 46 und eine Gewichtung der Fahrzeuggeschwindigkeit in Block 48 sowie ein Integrationsfaktor in Block 50 vorgegeben. Eine mögliche Begrenzung des Kompensationswert wird in Block 52 eingeführt.

Ein Integrator 54 integriert das gemessene Handmoment und wird lediglich zurückgesetzt, wenn ein OR-Glied 56 logisch 1 ausgibt. Der Integrationswert I_{H} wird über ein PT1-Glied verzögert in Block 56 dem aktuellen Handmoment hinzugefügt, so dass sich in 58 ein korrigiertes Handmoment ergibt.

Dieses korrigierte Handmoment sollte so gering sein oder gleich null sein, so dass der Fahrer mit geringem bzw. ohne Kraftaufwand den Geradeauslauf des Kraftfahrzeugs bei längeranliegenden Störgrößen sicherstellen kann aber dennoch über das anliegende Handmoment ausreichend Informationen zu der aktuellen Fahrsituation und hierbei insbesondere zu kurzzeitigen Einwirkungen erhält.

## Patentansprüche

1. Verfahren zum Betreiben einer Hilfskraftlenkung (10), bei dem eine Geradeauslaufkompensation durchgeführt wird,
**dadurch gekennzeichnet, dass**
das aufgebrachte Handmoment (M_{H}) abzüglich eines Kompensationswerts (M_{K}) über einen Zeitraum integriert wird und der Integrationswert (I_{H}) als der Kompensationswert (M_{K}) mit dem aktuellen Handmoment (M_{H}) verrechnet wird.

2. Verfahren nach Anspruch 1, bei dem der Kompensationswert (M_{K}) unter Berücksichtigung von Handmoment (M_{H}), Lenkwinkel, Lenkgeschwindigkeit, Gierrate, Fahrzeuggeschwindigkeit und/oder Querbeschleunigung berechnet wird.

3. Verfahren nach Anspruch 1 oder 2, bei dem der Kompensationswert (M_{K}) bei hohen Lenkwinkeln, Lenkgeschwindigkeiten, Handmomenten (M_{H}), Gierraten und/oder Querbeschleunigungen zurückgesetzt wird.

4. Verfahren nach einem der Ansprüche 1 bis 3, bei dem der Kompensationswert (M_{K}) mit einem PT1-Glied gefiltert wird.

5. Verfahren nach einem der Ansprüche 1 bis 4, bei dem eine Integrationszeitkonstante in Abhängigkeit der Fahrgeschwindigkeit des Kraftfahrzeugs vorgegeben wird.

6. Computerprogramm mit Programmcodemitteln, um ein Verfahren zum Betreiben einer Hilfskraftlenkung (10) bei einem Kraftfahrzeug gemäß einem der Ansprüche 1 bis 5 durchzuführen, wenn das Computerprogramm auf einem Mikroprozessor eines Computers, insbesondere in einem Steuergerät (14) der Hilfskraftlenkung (10), ausgeführt wird.

7. Computerprogrammprodukt mit Programmcodemitteln, die auf einem computerlesbaren Datenträger gespeichert sind, um ein Verfahren zum Betreiben einer Hilfskraftlenkung (10) bei einem Kraftfahrzeug gemäß einem der Ansprüche 1 bis 5 durchzuführen, wenn das Computerprogramm auf einem Mikroprozessor eines Computers, insbesondere in einem Steuergerät (14) der Hilfskraftlenkung (10), ausgeführt wird.

8. Hilfskraftlenkung eines Kraftfahrzeugs, die aufweist:
eine Lenkhandhabe (12),
einen Servoantrieb (16) mit einem Elektromotor,
ein elektronisches Steuergerät (14) zur Ansteuerung des Elektromotors,
**dadurch gekennzeichnet, dass** das elektronische Steuergerät (14) zur Durchführung eines Verfahrens nach einem der Ansprüche 1 bis 5 ausgebildet ist.
